# EUROPEAN PATENT APPLICATION

(11) **EP 4 656 477 A1**
(43) Date of publication of application: **03.12.2025**
(21) Application number: 23918068.0
(22) Date of filing: 27.01.2023
(51) Int. Cl.: B60W 30/06

(54) **PARKING ASSISTANCE METHOD AND DRIVING ASSISTANCE DEVICE**

(71) Applicant: Nissan Motor Co., Ltd., Kanagawa 221-0023 (JP)
(72) Inventor: MUSHA, Yusuke, Atsugi-shi, Kanagawa 243-0123 (JP); SUZUKI, Yasuhiro, Atsugi-shi, Kanagawa 243-0123 (JP); TAKEDA, Muku, Atsugi-shi, Kanagawa 243-0123 (JP); MATSUMOTO, Manato, Atsugi-shi, Kanagawa 243-0123 (JP)
(74) Representative: Grünecker Patent- und Rechtsanwälte PartG mbB
(86) International application number: PCT/JP2023/002588
(87) International publication number: WO 2024/157443

(57) **Abstract**

A parking assistance method includes: determining whether or not travel assistance control including at least one of control to assist the own vehicle in traveling within a travel lane, control to assist the own vehicle in traveling at a constant speed, and control to assist the own vehicle in keeping constant inter-vehicle distance between the own vehicle and a preceding vehicle is being executed (S2); determining whether or not the own vehicle is positioned in a vicinity of the target parking position registered in advance (S1); displaying, when the travel assistance control is not being executed and the own vehicle is positioned in a vicinity of the target parking position, guidance of a parking assistance function of assisting parking of the own vehicle at the target parking position on a display device (S3); and not displaying, when the travel assistance control is being executed or the own vehicle is not positioned in a vicinity of the target parking position, guidance of the parking assistance function on the display device (S4).

## Description

### Technical Field

The present invention relates to a parking assistance method and a driving assistance device.

### Background Art

In PTL 1 described below, a parking assistance method including storing in advance a parking route and a target parking position in parking operation performed in the past and notifying, when a vehicle comes close to the target parking position, a user of a message prompting start of parking assistance is described.

### Citation List

### Patent Literature

PTL 1: JP 2022-133230 A

### Summary of Invention

### Technical Problem

However, when in a vehicle with a parking assistance function to assist parking of the vehicle at a target parking position, guidance of the parking assistance function is displayed on the display device just as the vehicle comes close to the target parking position, there is a risk that the user may feel annoyed when the user does not intend to park the vehicle at the target parking position.

An object of the present invention is to suppress, in a vehicle with a parking assistance function of assisting parking at a target parking position, unnecessary display of guidance of the parking assistance function.

### Solution to Problem

According to one aspect of the present invention, a parking assistance method for assisting parking of an own vehicle at a target parking position is provided. The parking assistance method includes: determining whether or not travel assistance control including at least one of control to assist the own vehicle in traveling within a travel lane, control to assist the own vehicle in traveling at a constant speed, and control to assist the own vehicle in keeping constant inter-vehicle distance between the own vehicle and a preceding vehicle is being executed; determining whether or not the own vehicle is positioned in a vicinity of the target parking position registered in advance; displaying, when the travel assistance control is not being executed and the own vehicle is positioned in a vicinity of the target parking position, guidance of a parking assistance function of assisting parking of the own vehicle at the target parking position on a display device; and not displaying, when the travel assistance control is being executed or the own vehicle is not positioned in a vicinity of the target parking position, guidance of the parking assistance function on the display device.

### Advantageous Effects of Invention

According to the present invention, in a vehicle with a parking assistance function of assisting parking at a target parking position, it is possible to suppress unnecessary display of guidance of the parking assistance function.

The object and advantages of the invention will be realized and attained by means of the elements and combinations particularly pointed out in the claims. It is to be understood that both the foregoing general description and the following detailed description are exemplary and explanatory and are not restrictive of the invention.

### Brief Description of Drawings

FIG. 1 is a diagram illustrative of a schematic configuration example of a driving assistance device of embodiments;
FIGS. 2A and 2B are schematic diagrams descriptive of parking assistance control;
FIG. 3 is a schematic diagram of an example of a first guidance screen;
FIG. 4 is a schematic diagram of an example of a second guidance screen;
FIG. 5 is a flowchart of a parking assistance method of a first embodiment;
FIG. 6 is a block diagram of an example of a functional configuration of a controller in FIG. 1; and
FIG. 7 is a flowchart of a parking assistance method of a second embodiment.

### Description of Embodiments

### (First Embodiment)

### (Configuration)

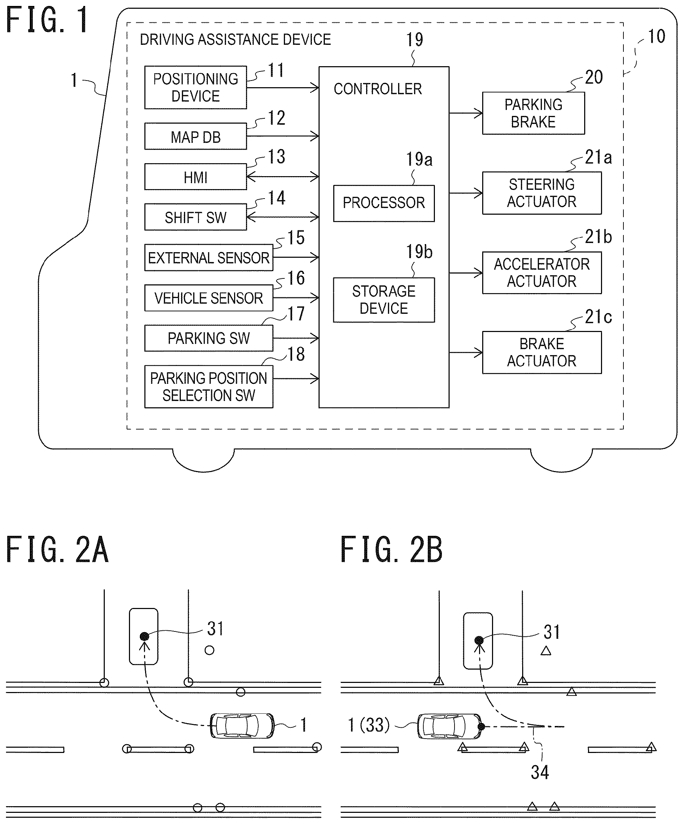

FIG. 1 is a diagram illustrative of a schematic configuration example of a driving assistance device of embodiments. An own vehicle 1 includes a driving assistance device 10 that has a parking assistance function and a travel assistance function. The driving assistance device 10 is an example of a "driving assistance device" described in the claims.

The parking assistance function is a function of assisting the own vehicle 1 in traveling along a target parking route from a current position of the own vehicle 1 to a target parking position. For example, the driving assistance device 10 may perform autonomous driving to control the own vehicle 1 to travel to the target parking position along the target parking route of the own vehicle 1. The autonomous driving to control the own vehicle 1 to travel to the target parking position along the target parking route means control to automatically perform all or a portion of travel along the target parking route of the own vehicle 1 by controlling all or some of a steering angle, driving force, and braking force of the own vehicle 1. Alternatively, the parking assistance device 10 may assist a user on board the own vehicle 1 (for example, a passenger such as a driver) in parking the own vehicle 1 by displaying the target parking route and the current position of the own vehicle 1 on a display device that the user can visually recognize.

The travel assistance function may include, for example, a lane keeping assistance function of assisting the own vehicle 1 in traveling within a travel lane. The travel assistance function may include a constant speed travel assistance function of assisting the own vehicle 1 in traveling at a constant speed. The travel assistance function may include an inter-vehicle distance keeping assistance function of assisting the own vehicle 1 in keeping constant inter-vehicle distance between the own vehicle 1 and a preceding vehicle. The travel assistance function performed by the driving assistance device 10 may include only one or any two of the lane keeping assistance function, the constant speed travel assistance function, and the inter-vehicle distance keeping assistance function, or may include all of the foregoing. For example, the travel assistance function performed by the driving assistance device 10 may be an autonomous driving function of causing the own vehicle 1 to autonomously travel to a set destination. The autonomous driving function may include all of the lane keeping assistance function, the constant speed travel assistance function, and the inter-vehicle distance keeping assistance function.

Note that in the following description, controls performed by the driving assistance device 10 to achieve the parking assistance function, the travel assistance function, the lane keeping assistance function, the constant speed travel assistance function, and the inter-vehicle distance keeping assistance function are sometimes referred to as "parking assistance control", "travel assistance control", "lane keeping assistance control", "constant speed travel assistance control", and "inter-vehicle distance keeping assistance control", respectively.

A positioning device 11 measures the current position of the own vehicle 1. The positioning device 11 includes, for example, a global navigation satellite system (GNSS) receiver. In a map database (map DB) 12, map data are stored. The map data stored in the map database 12 may be, for example, map data for navigation or high-definition map data that is suitable as a map for autonomous driving.

Human-machine interfaces (HMIs) 13 are interface devices that transfer information between the driving assistance device 10 and the user. For example, the HMIs 13 may include a display device that the user can visually recognize, as an interface presenting visual information to the user. In addition, the HMIs 13 may include a speaker or a buzzer as an interface presenting auditory information to the user. In addition, the HMIs 13 may include an interface (such as a touch panel, a button, a switch, a lever, a dial, and a keyboard) accepting an operation input from the user.

A shift switch (shift SW) 14 is a switch for the driver or the driving assistance device 10 to switch a shift position of the own vehicle 1.

External sensors 15 detect an object existing in a predetermined distance range from the own vehicle 1. The external sensors 15 detect a surrounding environment of the own vehicle 1, such as a relative position between an object existing in surroundings of the own vehicle 1 and the own vehicle 1, distance between the own vehicle 1 and the object, and a direction in which the object exists. The external sensors 15 may include, for example, a camera to capture an image depicting the surrounding environment of the own vehicle 1. The external sensors 15 may include a ranging device, such as a laser range finder, a radar, a light detection and ranging (LiDAR), and a sonar. Vehicle sensors 16 detect various information (vehicle information) about the own vehicle 1. For example, the vehicle sensors 16 may include a vehicle speed sensor to detect traveling speed of the own vehicle 1, a triaxial acceleration sensor to detect acceleration (including deceleration) in three axial directions of the own vehicle 1, and a sensor to detect a steering angle of a steering wheel or a steered angle of steered wheels.

A parking switch (parking SW) 17 is a switch to accept an operation input from the user to instruct start of the parking assistance control performed by the driving assistance device 10.

A parking position selection switch (parking position selection SW) 18 is a switch to accept an operation of, when there exist a plurality of candidates for the target parking position in the surroundings of the own vehicle 1, the user selecting one of such candidates. For example, a touch panel may be installed on the display device in the HMIs 13 and an operation of the user touching an image of the parking position selection switch 18 displayed on the display device may be detected by the touch panel.

A parking brake 20 generates friction braking force on wheels of the own vehicle 1 in accordance with operation by the user or a control signal from a controller 19.

A steering actuator 21a controls steering direction and the amount of steering of a steering mechanism of the own vehicle 1 in accordance with a control signal from the controller 19. An accelerator actuator 21b controls accelerator opening of a drive device, which is an engine or a drive motor, in accordance with a control signal from the controller 19. A brake actuator 21c causes a braking device to operate in accordance with a control signal from the controller 19.

The controller 19 is an electronic control unit that performs the parking assistance control and the travel assistance control of the own vehicle 1. The controller 19 includes a processor 19a and a peripheral component, such as a storage device 19b. The processor 19a may be, for example, a CPU or an MPU. The storage device 19b may include a semiconductor storage device, a magnetic storage device, an optical storage device, or the like. Functions of the controller 19, which will be described below, are achieved by, for example, the processor 19a executing computer programs stored in the storage device 19b.

For example, in the lane keeping assistance function, the controller 19 may recognize lane markers of a travel lane that is a lane in which the own vehicle 1 is traveling, based on detection signals from the external sensors 15 and control the steering actuator 21a or output a notification prompting the user to perform steering operation from an HMI 13 in such a way that the own vehicle 1 travels along the travel lane (for example, in such a way that the own vehicle 1 travels at a predetermined lateral direction position in the travel lane).

In addition, for example, in the constant speed travel assistance control, the controller 19 may control the accelerator actuator 21b and the brake actuator 21c or output a notification prompting the user to perform acceleration/deceleration operation from an HMI 13 in such a way that the own vehicle 1 travels at a constant speed, based on traveling speed of the own vehicle 1 that the vehicle speed sensor in the vehicle sensors 16 detects.

In addition, for example, in the inter-vehicle distance keeping assistance control, the controller 19 may recognize inter-vehicle distance between the own vehicle 1 and a preceding vehicle, based on detection signals from the external sensors 15 and control the accelerator actuator 21b and the brake actuator 21c or output a notification prompting the user to perform acceleration/deceleration operation from an HMI 13 in such a way that the own vehicle 1 keeps constant the inter-vehicle distance.

Next, the parking assistance control performed by the controller 19 will be described. When the parking assistance control is used, a target parking position 31 at which the own vehicle 1 is to be parked is registered in the driving assistance device 10 in advance. FIG. 2A is an explanatory diagram of an example of processing performed in a scene in which the target parking position 31 is registered in the driving assistance device 10 in advance.

When the target parking position 31 is registered in the driving assistance device 10, a target object existing in surroundings of the target parking position 31 is extracted and stored (registered) in the storage device 19b in advance. In the following description, a target object in the surroundings of the target parking position 31 to be stored in the storage device 19b is referred to as "learned target object". In FIG. 2A, circular marks schematically represent learned target objects. When the target parking position 31 is to be registered in the driving assistance device 10, the user performs an operation to instruct registration of the target parking position 31 (hereinafter, sometimes referred to as "registration operation").

For example, the controller 19 detects a target object in the surroundings of the own vehicle 1 by the external sensors 15 and stores the detected target object as a learned target object when the own vehicle 1 is positioned in a vicinity of the target parking position 31 (for example, when the user parks the own vehicle 1 at the target parking position 31 by manual driving). For example, the controller 19 may detect a target object from a surrounding image that is obtained by capturing the surroundings of the own vehicle 1 by the camera. For example, the controller 19 may detect, as a target object, an edge point where luminance changes between adjacent pixels by a predetermined amount or more or a point having a characteristic shape (a feature point), such as an edge or a corner of a target object like a pavement marking, a road boundary, an obstacle, or the like, in the captured image obtained by capturing the surroundings by the camera.

The controller 19 stores learned target object data relating to a learned target object in the storage device 19b. For example, the learned target object data may include data representing a feature amount of a learned target object (hereinafter, referred to as "feature amount data"), data representing a relative positional relationship between the target parking position 31 and the learned target object (hereinafter, referred to as "relative position data"), and position data of the target parking position 31 in a coordinate system with a fixed point as a reference point (hereinafter, referred to as "map coordinate system").

As the relative position data, a relative position of a learned target object with reference to the target parking position 31 may be stored. For example, the controller 19 can acquire a position of a learned target object detected when the own vehicle 1 is parked at the target parking position 31 as a relative position of the learned target object with reference to the target parking position 31. The controller 19 may store coordinates of a learned target object and the target parking position 31 in the map coordinate system.

FIG. 2B is an explanatory diagram of an example of processing in a scene in which parking assistance assisting parking of the own vehicle 1 at the target parking position 31 is performed. When the controller 19 assists parking of the own vehicle 1 at the target parking position 31, the controller 19 extracts a target object in the surroundings of the own vehicle 1 by the external sensors 15. In the following description, a target object in the surroundings of the own vehicle 1 that is extracted when the parking assistance is performed is referred to as "surrounding target object". In FIG. 2B, triangular marks represent surrounding target objects. The controller 19 detects the target parking position 31 existing in the surroundings of the own vehicle 1 by matching a learned target object and a surrounding target object with each other and associating the same feature points with each other. The controller 19 calculates a relative position of the own vehicle 1 with respect to the target parking position 31, based on a relative positional relationship between a surrounding target object detected when the parking assistance is performed and the own vehicle 1 and a relative positional relationship between a learned target object associated with the surrounding target object and the target parking position 31.

For example, the controller 19 calculates a position of the target parking position 31 in a coordinate system with reference to the current position of the own vehicle 1 (hereinafter, referred to as "vehicle coordinate system"). Note that when coordinates of the learned target object and the target parking position 31 in the map coordinate system are stored in the storage device 19b, the controller 19 may convert the coordinates of the target parking position 31 in the map coordinate system to coordinates in the vehicle coordinate system, based on the position of the surrounding target object detected when the parking assistance is performed and the position of the learned target object in the map coordinate system. The controller 19 may calculate the self-position of the own vehicle 1 in the map coordinate system, based on the position of the surrounding target object detected when the parking assistance is performed and the position of the learned target object in the map coordinate system, and calculate the relative position of the own vehicle 1 with respect to the target parking position 31 from a difference between the coordinates of the own vehicle 1 and the coordinates of the target parking position 31 in the map coordinate system.

The controller 19 calculates a target parking route 34 starting from a current position 33 of the own vehicle 1 and reaching the target parking position 31. The controller 19 performs the parking assistance control of the own vehicle 1, based on the calculated target parking route 34.

When the controller 19 assists parking of the own vehicle 1 at the target parking position 31, the controller 19 displays guidance of the parking assistance function on the display device in the HMIs 13. For example, the controller 19 may display a first guidance screen to notify that the controller 19 is searching for the target parking position 31 existing in the surroundings of the own vehicle 1 as the guidance of the parking assistance function.

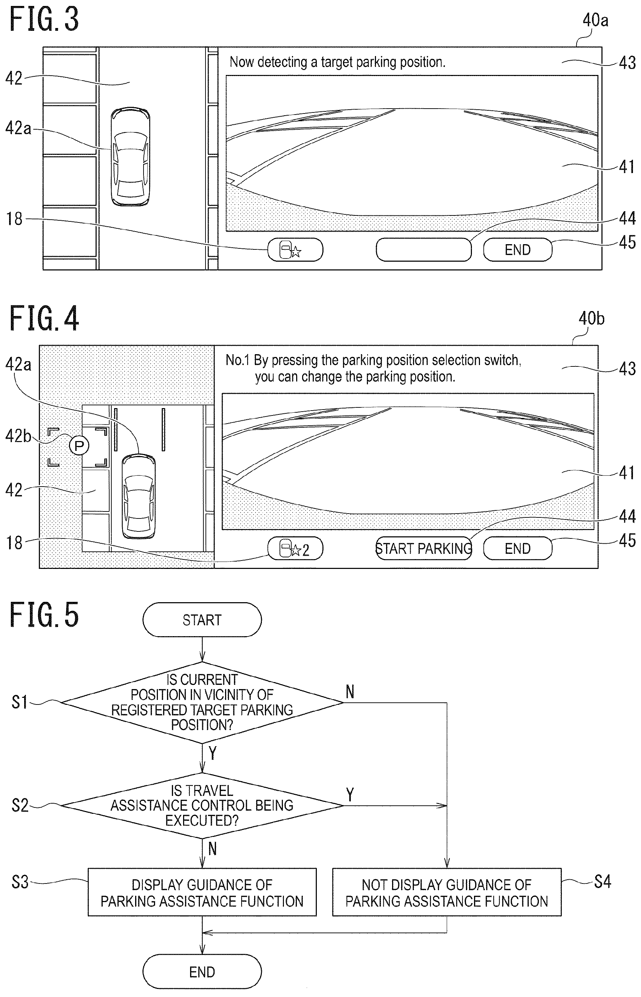

FIG. 3 is a schematic diagram of an example of the first guidance screen. A first guidance screen 40a includes a captured image 41 generated by capturing the surroundings of the own vehicle 1, an overhead view image 42 generated by converting captured images of the surroundings of the own vehicle 1, a graphical user interface (GUI) of the parking position selection switch 18, a message display area 43 in which a notification such as a visual message is displayed, a parking start button 44, and an end button 45. When the user operates the parking position selection switch 18 or the end button 45 displayed on the display device, a touch panel provided on the display device detects such an operation. Note that in the first guidance screen 40a, the parking start button 44 is disabled.

In the overhead view image 42, an icon 42a representing the current position of the own vehicle 1 is displayed in a superimposing manner. In the message display area 43 of the first guidance screen 40a, the controller 19 may display, for example, a notification, such as a visual message, that notifies the user that the controller 19 is searching for a target parking position. When the end button 45 is operated, the controller 19 suspends the parking assistance control. The same applies to a case where an end button 45 in a second guidance screen 40b, which will be described later, illustrated in FIG. 4 is operated.

In addition, when the detection of the target parking position 31 existing in the surroundings of the current position of the own vehicle 1 succeeds, the controller 19 may display a second guidance screen to accept an operation by the user to instruct start of driving assistance control to the detected target parking position 31, as guidance of the parking assistance function.

FIG. 4 is a schematic diagram of an example of the second guidance screen. The second guidance screen 40b includes a captured image 41, an overhead view image 42, a message display area 43, a GUI of a parking position selection switch 18, a parking start button 44, and an end button 45. When the user operates the parking start button 44, the touch panel provided on the display device detects such an operation.

In the overhead view image 42, an icon 42a representing the current position of the own vehicle 1 and a target parking position mark 42b representing the target parking position 31 detected in the surroundings of the current position of the own vehicle 1 are displayed in a superimposing manner. Note that in the example of the overhead view image 42 of the second guidance screen 40b in FIG. 4, by reducing a scale of the overhead view image 42 compared with the overhead view image 42 of the first guidance screen 40a in FIG. 3, an area of a predetermined size of a parking space at the target parking position 31 is displayed in the first guidance screen 40a. In the example in FIG. 4, the whole area of the parking space is displayed.

When the parking start button 44 is operated, the controller 19 starts the assistance in parking of the own vehicle 1 at the target parking position 31. As described above, the parking start button 44 is disabled in the first guidance screen 40a in FIG. 3, and even when the parking start button 44 is operated in the first guidance screen 40a, the controller 19 does not start the parking assistance.

In the case of parking the own vehicle 1 at the target parking position 31, when the guidance of the parking assistance function as described above is automatically displayed on the display device in the HMIs 13, convenience of the parking assistance function is improved. However, when the guidance of the parking assistance function is displayed on the display device in the HMIs 13 even though the user does not intend to park the own vehicle 1, the display gives annoyance to the user.

Therefore, the controller 19 determines whether or not the travel assistance control is being executed. In addition, the controller 19 determines whether or not the own vehicle 1 is positioned in a vicinity of the target parking position 31 (for example, the controller 19 determines whether or not the own vehicle 1 is positioned within a range of a predetermined distance from the target parking position 31). For example, the controller 19 determines whether or not the current position of the own vehicle 1, as measured by the positioning device 11, is within a range of a predetermined distance from the position of the target parking position 31, which is stored as the learned target object data.

When the travel assistance control is not being executed and the own vehicle 1 is positioned in the vicinity of the target parking position 31, the controller 19 automatically displays the guidance of the parking assistance function on the display device in the HMIs 13. When the travel assistance control is being executed or the own vehicle 1 is not positioned in the vicinity of the target parking position 31, the controller 19 does not automatically displays the guidance of the parking assistance function on the display device.

When the travel assistance control is being executed, it is estimated that the user does not intend to park the own vehicle 1. Thus, when the travel assistance control is being executed even though the own vehicle 1 is positioned in the vicinity of the target parking position 31, by not displaying the guidance of the parking assistance function, unnecessary display of the guidance of the parking assistance function can be suppressed.

### (Operation)

FIG. 5 is a flowchart of a parking assistance method of a first embodiment. In step S1, the controller 19 determines whether or not the current position of the own vehicle 1 is in the vicinity of the target parking position 31. When the current position is not in the vicinity of the target parking position 31 (step S1: N), the process proceeds to step S4. When the current position is in the vicinity of the target parking position 31 (step S1: Y), the process proceeds to step S2. In step S2, the controller 19 determines whether or not the travel assistance control is being executed. When the travel assistance control is not being executed (step S2: N), the process proceeds to step S4. When the travel assistance control is being executed (step S2: Y), the process proceeds to step S3. In step S3, the controller 19 displays the guidance of the parking assistance function. Subsequently, the process terminates. In step S4, the controller 19 does not display the guidance of the parking assistance function. Subsequently, the process terminates.

### (Second Embodiment)

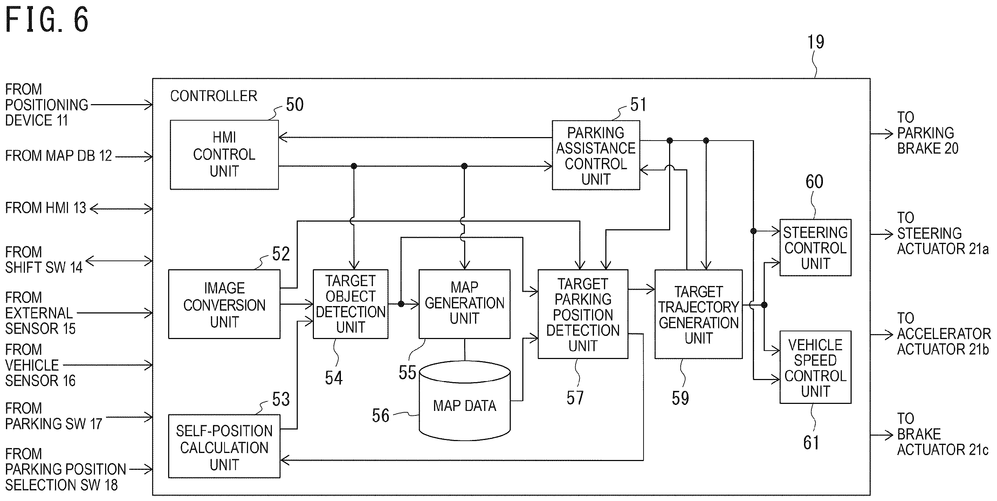

FIG. 6 is a block diagram of an example of a functional configuration of a parking assistance function performed by a controller in FIG. 1. When an HMI control unit 50 detects a registration operation of a target parking position 31 performed by a user, the HMI control unit 50 outputs a map generation command to cause learned target object data to be stored in a storage device 19b, to a map generation unit 55.

An image conversion unit 52 converts a captured image captured by a camera to an overhead view image that is an image viewed from a virtual viewpoint directly above an own vehicle 1. The image conversion unit 52 generates a surrounding image that is an image depicting a surrounding region of the own vehicle 1 by converting a captured image to an overhead view image at a predetermined interval and accumulating converted overhead view images along a travel route of the own vehicle 1.

A self-position calculation unit 53 calculates a current position of the own vehicle 1 in a map coordinate system as a self-position by odometry (for example, dead reckoning) based on vehicle information output from vehicle sensors 16.

A target object detection unit 54 detects a target object from a surrounding image output from the image conversion unit 52. The target object detection unit 54 may detect a position of a feature point of a target object and an image feature amount of the feature point as a target object. The target object detection unit 54 outputs the detected position and image feature amount of the feature point to the map generation unit 55 and a target parking position detection unit 57 as target object data. In addition, the target object detection unit 54 outputs the self-position acquired from the self-position calculation unit 53 in synchronization with the detection of the target object to the map generation unit 55 and the target parking position detection unit 57.

When the map generation unit 55 receives a map generation command from the HMI control unit 50 (that is, when the registration operation of the target parking position 31 is performed), the map generation unit 55 generates learned target object data and stores the generated learned target object data in the storage device 19b as map data 56. For example, the map generation unit 55 receives target object data and a self-position of the own vehicle 1 in the map coordinate system that is synchronous with the target object data from the target object detection unit 54. The map generation unit 55 acquires position information of the target parking position 31 in the map coordinate system. For example, the map generation unit 55 may acquire a self-position that the self-position calculation unit 53 calculates when the own vehicle 1 is positioned at the target parking position 31 as the position information of the target parking position 31. The map generation unit 55 generates relative position data, based on a position of a feature point included in the target object data, position information of the own vehicle 1 synchronous with the position of the feature point, and position information of the target parking position 31. The map generation unit 55 acquires feature amount data from the target object data output from the target object detection unit 54. The map generation unit 55 stores learned target object data including the above-described relative position data and feature amount data and the position data of the target parking position 31 in the storage device 19b as the map data 56.

A parking assistance control unit 51 executes parking assistance control to assist parking of the own vehicle 1 at the target parking position 31 registered in the storage device 19b.

The parking assistance control unit 51 can be set to a "automatic start mode" in which the parking assistance control unit 51 automatically starts detection of the target parking position 31 existing in the surroundings of the own vehicle 1 and a "manual start mode" in which the parking assistance control unit 51 starts the detection of the target parking position 31 when an operation by the user to instruct start of the parking assistance control of the own vehicle 1 (hereinafter, sometimes referred to as "starting operation") is performed, by switching therebetween. For example, the starting operation may be an operation of a parking switch 17 by the user.

By operating an HMI 13, the user can set the parking assistance control unit 51 to either the automatic start mode or the manual start mode.

In the automatic start mode, when all of the following start conditions (A) to (C) are satisfied, the parking assistance control unit 51 automatically starts the detection of the target parking position 31.
(A) The own vehicle 1 is positioned in a vicinity of the target parking position 31 (for example, the own vehicle 1 is positioned within a range of a predetermined distance from the target parking position 31).
(B) Vehicle speed of the own vehicle 1 is less than or equal to a threshold value (for example, the own vehicle 1 is stopping).
(C) Travel assistance control is not being executed. Alternatively, a driving operation by the user has occurred during execution of the travel assistance control (for example, a braking operation by the user is detected during the execution of the travel assistance control, or an intervention operation in operation of a steering wheel is detected during execution of lane keeping assistance control).

In this configuration, when determining whether or not the own vehicle 1 is stopping, the parking assistance control unit 51 may, for example, determine whether or not speed detected by a vehicle speed sensor is 0 km/h and, when the speed detected by the vehicle speed sensor is 0 km/h, determine that the own vehicle 1 is stopping. The parking assistance control unit 51 may set a margin and determine that the own vehicle 1 has come to a stop when the speed detected by the vehicle speed sensor is less than or equal to a predetermined speed.

When in the automatic start mode, all the above-described start conditions (A) to (C) are satisfied or in the manual start mode, a starting operation is accepted from the user, the parking assistance control unit 51 outputs a parking position calculation command to the target parking position detection unit 57. The target parking position detection unit 57 receives target object data output from the target object detection unit 54 as target object data of a surrounding target object and also receives the self-position of the own vehicle 1 in the map coordinate system in synchronization with the reception of the target object data. The target parking position detection unit 57 detects the target parking position 31 by matching a learned target object and a surrounding target object with each other and associating the same feature points with each other. That is, the target parking position detection unit 57 determines whether or not the target parking position 31 can be detected, based on whether or not matching between the learned target object and the surrounding target object succeeds. When the matching succeeds (that is, when the target parking position 31 is detected), the target parking position detection unit 57 calculates a relative position of the own vehicle 1 with respect to the target parking position 31, based on a relative positional relationship between a surrounding target object and the own vehicle 1 and a relative positional relationship between a learned target object associated with the surrounding target object and the target parking position 31.

When the target parking position detection unit 57 starts the detection of the target parking position 31 existing in the surroundings of the own vehicle 1, the HMI control unit 50 displays guidance of the parking assistance function on a display device in HMIs 13. For example, while the parking assistance control unit 51 is searching for the target parking position 31 existing in the surroundings of the own vehicle 1, the HMI control unit 50 displays a first guidance screen 40a illustrated in FIG. 3 on the display device in the HMIs 13.

When the target parking position detection unit 57 detects the target parking position 31 existing in the surroundings of the own vehicle 1, the target parking position detection unit 57 automatically sets the detected target parking position 31 as the target parking position of the own vehicle 1 assisted by the parking assistance function (the target parking position at which the own vehicle 1 is to be parked by the parking assistance function). In addition, the HMI control unit 50 displays a second guidance screen 40b illustrated in FIG. 4 on the display device in the HMIs 13.

In this way, when the user sets the parking assistance control unit 51 to the automatic start mode, a function of automatically displaying the guidance of the parking assistance function when all the start conditions (A) to (C) are satisfied is enabled.

In addition, when the user sets the parking assistance control unit 51 to the manual start mode, the function of automatically displaying the guidance of the parking assistance function is disabled. In this case, when the target parking position detection unit 57 accepts a starting operation from the user, the target parking position detection unit 57 starts the detection of the target parking position 31 and, in association therewith, the HMI control unit 50 displays the guidance of the parking assistance function.

FIG. 4 is now referred to. When the target parking position detection unit 57 detects a plurality of target parking positions 31 existing in the surroundings of the own vehicle 1, the HMI control unit 50 may display the number of detected target parking positions 31 in the second guidance screen 40b. FIG. 4 illustrates an example in which when the target parking position detection unit 57 detects two target parking positions 31, the HMI control unit 50 displays the numeral "2" representing the number of detected target parking positions 31 at a position of a parking position selection switch 18.

When the target parking position detection unit 57 detects a plurality of target parking positions 31 existing in the surroundings of the own vehicle 1 as described above, the HMI control unit 50 may determine priorities of the target parking positions 31 in accordance with a prescribed rule and display a target parking position 31 with a higher priority preferentially over a target parking position 31 with a lower priority in the second guidance screen 40b. For example, the HMI control unit 50 may display a target parking position mark 42b representing a target parking position 31 with the highest priority. For example, the closer a target parking position 31 is located to the own vehicle 1, the higher priority the HMI control unit 50 may set for the target parking position 31.

In addition, the HMI control unit 50 may present all of the plurality of target parking positions existing in the surroundings of the own vehicle 1 or may present all of a plurality of target parking positions existing within a range of a predetermined distance from the own vehicle 1.

In addition, the HMI control unit 50 may also be configured to be able to select one of the plurality of target parking positions 31 in accordance with operation of the parking position selection switch 18 by the user and set the selected target parking position 31 as the target parking position of the own vehicle 1 assisted by the parking assistance function.

For example, at a time point when the display of the second guidance screen 40b is started, the HMI control unit 50 may display a target parking position mark 42b representing a target parking position 31 with the highest priority. When the HMI control unit 50 detects an operation of the parking position selection switch 18, the HMI control unit 50 may successively selects each of the plurality of target parking positions 31 in descending order of priority and display a target parking position mark 42b representing the selected target parking position 31.

When a parking start button 44 is operated, the assistance in parking of the own vehicle 1 at the target parking position 31 is started. FIG. 6 is now referred to. A target trajectory generation unit 59 calculates a target parking route starting from the current position of the own vehicle 1 and reaching the target parking position 31 in the vehicle coordinate system. The target trajectory generation unit 59 calculates a target vehicle speed profile that is a target value of vehicle speed of the own vehicle 1 on the target parking route. A steering control unit 60 controls a steering actuator 21a in such a way that the own vehicle 1 travels along the target parking route. A vehicle speed control unit 61 controls an accelerator actuator 21b and a brake actuator 21c in such a way that the vehicle speed of the own vehicle 1 changes in accordance with the target vehicle speed profile. When the own vehicle 1 reaches the target parking position 31 and the parking assistance control is completed, the parking assistance control unit 51 causes a parking brake 20 to operate and switches the shift position to a parking range.

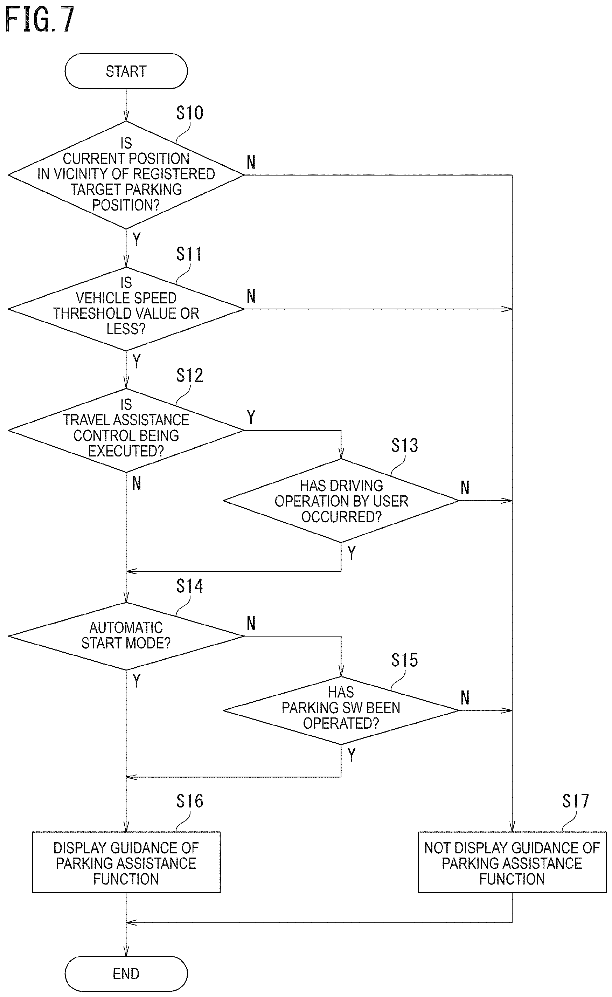

FIG. 7 is a flowchart of a parking assistance method of a second embodiment. In step S10, the parking assistance control unit 51 determines whether or not the current position of the own vehicle 1 is in the vicinity of the target parking position 31. When the current position is not in the vicinity of the target parking position 31 (step S10: N), the process proceeds to step S17. When the current position is in the vicinity of the target parking position 31 (step S10: Y), the process proceeds to step S11. In step S11, the parking assistance control unit 51 determines whether or not the vehicle speed of the own vehicle is less than or equal to a threshold value. When the vehicle speed is not less than or equal to the threshold value (step S11: N), the process proceeds to step S17. When the vehicle speed is less than or equal to the threshold value (step S11: Y), the process proceeds to step S12.

In step S12, the parking assistance control unit 51 determines whether or not the travel assistance control is being executed. When the travel assistance control is not being executed (step S12: N), the process proceeds to step S14. When the travel assistance control is being executed (step S12: Y), the process proceeds to step S13. In step S13, the parking assistance control unit 51 determines whether or not a driving operation by the user has occurred. When no driving operation has occurred (step S13: N), the process proceeds to step S17. When a driving operation occurs (step S13: Y), the process proceeds to step S14. In step S14, the parking assistance control unit 51 determines whether or not the parking assistance control unit 51 is set to the automatic start mode. When the parking assistance control unit 51 is set to the automatic start mode (step S14: Y), the process proceeds to step S16. When the parking assistance control unit 51 is not set to the automatic start mode (step S14: N), the process proceeds to step S15.

In step S15, the parking assistance control unit 51 determines whether or not the parking switch 17 has been operated. When the parking switch 17 has not been operated (step S15: N), the process proceeds to step S17. When the parking switch 17 is operated (step S15: Y), the process proceeds to step S16.

In step S16, the controller 19 displays the guidance of the parking assistance function. Subsequently, the process terminates. In step S17, the controller 19 does not display the guidance of the parking assistance function. Subsequently, the process terminates.

### (Advantageous Effects of Embodiments)

(1) A controller 19: determines whether or not travel assistance control including at least one of control to assist the own vehicle 1 in traveling within a travel lane, control to assist the own vehicle 1 in traveling at a constant speed, and control to assist the own vehicle 1 in keeping constant inter-vehicle distance between the own vehicle 1 and a preceding vehicle is being executed; determines whether or not the own vehicle 1 is positioned in a vicinity of the target parking position registered in advance; displays, when the travel assistance control is not being executed and the own vehicle 1 is positioned in a vicinity of the target parking position, guidance of a parking assistance function of assisting parking of the own vehicle 1 at the target parking position on a display device; and does not display, when the travel assistance control is being executed or the own vehicle 1 is not positioned in a vicinity of the target parking position, guidance of the parking assistance function on the display device. When the travel assistance control is being executed, by estimating that the user does not intend to park the own vehicle 1 and not displaying guidance of the parking assistance function in this way, unnecessary display of the guidance of the parking assistance function can be suppressed.
(2) When vehicle speed is less than or equal to a threshold value, the travel assistance control is not being executed, and the own vehicle 1 is positioned in a vicinity of the target parking position, the controller 19 may display guidance of the parking assistance function on the display device. When the vehicle speed is higher than the threshold value, when the travel assistance control is being executed, or when the own vehicle 1 is not positioned in a vicinity of the target parking position, the controller 19 does not have to display guidance of the parking assistance function on the display device. When the vehicle speed is higher than the threshold value, by estimating that the user does not intend to park the own vehicle 1 and not displaying guidance of the parking assistance function in this way, unnecessary display of the guidance of the parking assistance function can be suppressed.
(3) When the own vehicle 1 is stopping, the travel assistance control is not being executed, and the own vehicle 1 is positioned in a vicinity of the target parking position, the controller 19 may display guidance of the parking assistance function on the display device. When the own vehicle 1 is not stopping, when the travel assistance control is being executed, or when the own vehicle 1 is not positioned in a vicinity of the target parking position, the controller 19 does not have to display guidance of the parking assistance function on the display device. When the own vehicle 1 is not stopping, by estimating that the user does not intend to park the own vehicle 1 and not displaying guidance of the parking assistance function in this way, unnecessary display of the guidance of the parking assistance function can be suppressed.
(4) The controller 19 may display guidance of the parking assistance function and also select the target parking position registered in advance, the target parking position being detected in a vicinity of the own vehicle 1, as a target parking position of the own vehicle 1 assisted by the parking assistance function. Because of this configuration, labor of manual operation by the user to set a target parking position can be saved.
(5) The controller 19 may: store data representing a relative positional relationship between a target object existing in surroundings of the target parking position and the target parking position in a storage device as learned target object data in advance; detect a surrounding target object, the surrounding target object being a target object existing in surroundings of the own vehicle 1; and detect the target parking position existing in surroundings of the own vehicle 1, based on the learned target object data and the surrounding target object. Because of this configuration, the user can use parking assistance control to assist parking of the own vehicle 1 at a target parking position registered in advance.
(6) The controller 19 may display the target parking position in descending order of closeness to a current position of the own vehicle 1 on the display device as guidance of the parking assistance. Since because of this configuration, it is possible to propose the target parking positions in descending order of possibility of the user selecting the target parking position, labor of manual operation by the user to select a target parking position can be saved.
(7) A function of displaying guidance of the parking assistance function on the display device may be set to be disabled by an input to a user interface from a user of the own vehicle 1. In a case where a function of displaying guidance of the parking assistance function on the display device is set to be disabled by an input to the user interface from the user, when accepting an operation input from a user to instruct start of the parking assistance function, the controller 19 may display guidance of the parking assistance function on the display device. Because of this configuration, it is possible to display the guidance of the parking assistance function on the display device according to preference of the user.
(8) When a braking operation is detected during execution of the travel assistance control and the own vehicle 1 is positioned in a vicinity of the target parking position, the controller 19 may display guidance of the parking assistance function on the display device. In addition, when an intervention operation in operation of a steering wheel is detected during execution of the travel assistance control to assist the own vehicle 1 in traveling within a travel lane and the own vehicle 1 is positioned in a vicinity of the target parking position, the controller 19 may display guidance of the parking assistance function on the display device. When a driving operation by the user occurs even during execution of the travel assistance control, by estimating that the user intends to park the own vehicle 1 and displaying the guidance of the parking assistance function in this way, labor of manual operation by the user to start the parking assistance function can be saved.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

### Reference Signs List

1 Own vehicle
10 Driving assistance device
11 Positioning device
12 Map database
13 Human-machine interface
14 Shift switch
15 External sensor
16 Vehicle sensor
17 Parking switch
18 Parking position selection switch
19 Controller
19a Processor
19b Storage device
20 Parking brake
21a Steering actuator
21b Accelerator actuator
21c Brake actuator
50 HMI control unit
51 Parking assistance control unit
52 Image conversion unit
53 Self-position calculation unit
54 Target object detection unit
55 Map generation unit
56 Map data
57 Target parking position detection unit
59 Target trajectory generation unit
60 Steering control unit
61 Vehicle speed control unit

## Claims

1. A parking assistance method for assisting parking of an own vehicle at a target parking position, the parking assistance method comprising:
determining whether or not travel assistance control including at least one of control to assist the own vehicle in traveling within a travel lane, control to assist the own vehicle in traveling at a constant speed, and control to assist the own vehicle in keeping constant inter-vehicle distance between the own vehicle and a preceding vehicle is being executed;
determining whether or not the own vehicle is positioned in a vicinity of the target parking position registered in advance;
displaying, when the travel assistance control is not being executed and the own vehicle is positioned in a vicinity of the target parking position, guidance of a parking assistance function of assisting parking of the own vehicle at the target parking position on a display device; and
not displaying, when the travel assistance control is being executed or the own vehicle is not positioned in a vicinity of the target parking position, guidance of the parking assistance function on the display device.

2. The parking assistance method according to claim 1,
wherein
when vehicle speed of the own vehicle is less than or equal to a threshold value, the travel assistance control is not being executed, and the own vehicle is positioned in a vicinity of the target parking position, the parking assistance method displays guidance of the parking assistance function on the display device, and
when the vehicle speed is higher than the threshold value, when the travel assistance control is being executed, or when the own vehicle is not positioned in a vicinity of the target parking position, the parking assistance method does not display guidance of the parking assistance function on the display device.

3. The parking assistance method according to claim 1,
wherein
when the own vehicle is stopping, the travel assistance control is not being executed, and the own vehicle is positioned in a vicinity of the target parking position, the parking assistance method displays guidance of the parking assistance function on the display device, and
when the own vehicle is not stopping, when the travel assistance control is being executed, or when the own vehicle is not positioned in a vicinity of the target parking position, the parking assistance method does not display guidance of the parking assistance function on the display device.

4. The parking assistance method according to any one of claims 1 to 3, wherein the parking assistance method displays guidance of the parking assistance function and also selects the target parking position registered in advance, the target parking position being detected in a vicinity of the own vehicle, as a target parking position of the own vehicle assisted by the parking assistance function.

5. The parking assistance method according to any one of claims 1 to 4 comprising:
storing data representing a relative positional relationship between a target object existing in surroundings of the target parking position and the target parking position in a storage device as learned target object data in advance;
detecting a surrounding target object, the surrounding target object being a target object existing in surroundings of the own vehicle; and
detecting the target parking position existing in surroundings of the own vehicle, based on the learned target object data and the surrounding target object.

6. The parking assistance method according to claim 4,
wherein the parking assistance method displays the target parking position in descending order of closeness to a current position of the own vehicle on the display device as guidance of the parking assistance.

7. The parking assistance method according to any one of claims 1 to 6, wherein
a function of displaying guidance of the parking assistance function on the display device can be set to be disabled by an input to a user interface from a user of the own vehicle, and
in a case where a function of displaying guidance of the parking assistance function on the display device is set to be disabled by an input to the user interface from the user, when accepting an operation input from a user to instruct start of the parking assistance function, the parking assistance method displays guidance of the parking assistance function on the display device.

8. The parking assistance method according to any one of claims 1 to 7, wherein when a braking operation is detected during execution of the travel assistance control and the own vehicle is positioned in a vicinity of the target parking position, the parking assistance method displays guidance of the parking assistance function on the display device.

9. The parking assistance method according to any one of claims 1 to 8, wherein when an intervention operation in operation of a steering wheel is detected during execution of the travel assistance control to assist the own vehicle in traveling within a travel lane and the own vehicle is positioned in a vicinity of the target parking position, the parking assistance method displays guidance of the parking assistance function on the display device.

10. A driving assistance device configured to assist parking of an own vehicle at a target parking position, the driving assistance device comprising:
a display device; and
a controller configured to: determine whether or not travel assistance control including at least one of control to assist the own vehicle in traveling within a travel lane, control to assist the own vehicle in traveling at a constant speed, and control to assist the own vehicle in keeping constant inter-vehicle distance between the own vehicle and a preceding vehicle is being executed; determine whether or not the own vehicle is positioned in a vicinity of the target parking position registered in advance; display, when the travel assistance control is not being executed and the own vehicle is positioned in a vicinity of the target parking position, guidance of a parking assistance function of assisting parking of the own vehicle at the target parking position on the display device; and not display, when the travel assistance control is being executed or the own vehicle is not positioned in a vicinity of the target parking position, guidance of the parking assistance function on the display device.
